# EUROPÄISCHE PATENTSCHRIFT

(11) **EP 3 874 592 B1**
(45) Veröffentlichungstag und Bekanntmachung des Hinweises auf die Patenterteilung: **12.07.2023**
(21) Anmeldenummer: 19804622.9
(22) Anmeldetag: 29.10.2019
(51) Int. Cl.: H02P 8/34

(54) **VERFAHREN UND SCHALTUNGSANORDNUNG ZUR SENSORLOSEN LASTERFASSUNG BEI SCHRITTMOTOREN**
METHOD AND CIRCUIT ASSEMBLY FOR SENSORLESS LOAD DETECTION IN STEPPER MOTORS
PROCÉDÉ ET AGENCEMENT DE COMMUTATION POUR LA DÉTECTION DE CHARGE SANS CAPTEUR POUR DES MOTEURS PAS-À-PAS

(30) Priorität: 29.10.2018 DE 102018126954
(43) Veröffentlichungstag der Anmeldung: 08.09.2021
(73) Patentinhaber: Maxim Integrated Products, Inc., San Jose, CA 95134 (US)
(72) Erfinder: DWERSTEG, Bernhard, 25462 Rellingen (DE)
(74) Vertreter: Canzler & Bergmeier Patentanwälte Partnerschaft mbB
(86) Internationale Anmeldenummer: PCT/DE2019/100933
(87) Internationale Veröffentlichungsnummer: WO 2020/088715

(56) Entgegenhaltungen:
- DE-A1-102014 212 612
- US-A1- 2009 066 278
- US-A1- 2011 169 442

## Beschreibung

Die Erfindung betrifft ein Verfahren und eine Schaltungsanordnung, mit dem/der bei einem Schrittmotor eine an dessen Motorwelle anliegende mechanische Last in einer Spannungsbasierten (d.h. Spannungsgesteuerten oder Spannungsgeregelten) Betriebsart sensorlos erfasst werden kann. Die Erfindung ist sowohl für 2-Phasen-, als auch für 3- oder Mehrphasen-Schrittmotoren anwendbar.

In der WO 2011/026489 wird ein Verfahren und eine Schaltungsanordnung zur sensorlosen Motorlast- oder Lastwinkelerfassung bei einem Schrittmotor beschrieben, bei dem/der im Chopperbetrieb durch die Aktivierung von ON- und FD- (Fast-Decay) Phasen Spulenströme in die Motorspulen eingeprägt werden, und bei dem/der während eines fallenden Betrages eines durch mindestens eine der Spulen fließenden Stroms eine Differenz zwischen einer Zeitdauer der ON-Phasen und einer Zeitdauer der FD-Phasen ermittelt wird, wobei der Lastwinkel zu etwa 90° bzw. die Motorlast als maximal angenommen wird, wenn diese Differenz zumindest im Wesentlichen Null ist.

Ferner wird in der WO 2012/062310 ein Verfahren und eine Schaltungsanordnung zur sensorlosen Motorlastwinkel- oder Lastwerterfassung bei einem Schrittmotor beschrieben, bei dem/der mittels eines Chopper-Verfahrens aus zugeführten Soll-Spulenströmen ebenfalls Chopper-Schaltsignale erzeugt werden, mit denen mittels einer Motor-Versorgungsspannung die Soll-Spulenströme in Motorspulenanschlüsse eingeprägt werden, wobei der Lastwinkel bzw. der Lastwert eine gegeninduzierte Spannung (Gegen-EMK) in den Motorspulen erzeugt, und wobei eine durch die gegeninduzierte Spannung hervorgerufene Phasenverschiebung der Motorspannung an mindestens einem der Motorspulenanschlüsse gegenüber dem Spulenstrom an diesem Motorspulenanschluss erfasst und der Lastwinkel bzw. der Lastwert anhand dieser Phasenverschiebung ermittelt wird.

Eine Gemeinsamkeit dieser beiden bekannten Verfahren und Schaltungsanordnungen besteht darin, dass sie den Stromgesteuerten Betrieb des Motors betreffen, bei dem die tatsächlichen Spulenströme gemessen und in Abhängigkeit von deren Abweichung von den momentanen Soll-Spulenstromwerten zeitlich entsprechend bemessene Strompulse mittels des Chopper-Verfahrens in die Motorspulen eingeprägt werden. Diese Stromgesteuerte Betriebsart kann jedoch insbesondere bei niedrigen Motordrehzahlen und beim Stillstand des Motors an einer elektrisch festgelegten Position (d.h. in einer bestimmten Drehstellung) Nachteile haben, die zum Beispiel darin bestehen, dass kurzzeitige Stromänderungen aufgrund von Regelschwankungen auftreten können, die im hörbaren Frequenzbereich liegen und als störend empfunden werden. Außerdem kann es bei niedrigen Motorströmen in Verbindung mit einer daraus resultierenden, nur sehr kurzen Dauer der eingeprägten Strompulse aufgrund von Einschwingvorgängen und Blankzeiten schwierig sein, den tatsächlich während dieser kurzen Phasen fließenden Spulenstrom zuverlässig zu messen und mit dem jeweiligen momentanen Soll-Spulenstromwert zu vergleichen.

Deshalb wird bevorzugt, den Motor unterhalb einer vorbestimmten Drehzahl in der eingangs genannten Spannungsbasierten (d.h. Spannungsgesteuerten oder Spannungsgeregelten) Betriebsart zu betreiben, bei der der erforderliche Spulenstrom nicht über die Aktivierung und Dauer von Stromflussphasen (d.h. Chopper-Phasen) eingeprägt, sondern mittels einer an die Motorspulen angelegten Spannung (insbesondere eine PWM-Spannung) erzeugt und durch Veränderung des Betrages (Amplitude) und der Richtung (Polarität) dieser Spannung (bzw. des Tastverhältnisses der PWM-Spannung) eingestellt wird. Verfahren und Schaltungsanordnungen dieser Art sind aus der WO 2015/192831 und der WO 2018/072791 bekannt.

Allerdings sind die oben genannten Arten der Lastwinkelmessung in dieser Betriebsart nicht sinnvoll realisierbar.

Die DE 10 2014 212 612 A1 offenbart ein Verfahren und eine Vorrichtung nach dem jeweiligen Oberbegriff der unabhängigen Ansprüche. Hierbei offenbart die DE 10 2014 212 612 A1 ein Verfahren zur Erlangung eines Hinweises auf einen sich abzeichnenden Schrittverlust bei einem ein- oder mehrphasigen Schrittmotor. Dabei wird bei der Schrittverlusterkennung bei Schrittmotoren mit an sich bekannten Schaltschemata gearbeitet, die keine hochohmigen Phasen aufweisen. Hier wurde ein komplett komplementär arbeitendes Schema gewählt, in den die Spule immer in positiver oder negativer Polarität an die Versorgungsspannung angeschlossen ist. Durch die Überwachung des Verlaufs des Spannungsabfalls über mindestens einem Treiber (High-Side- oder Low-Side-Schalter, realisiert zumeist in Form von Leistungstransistoren) kann die Rezirkulationszeitspanne abgeschätzt werden, indem der Vorzeichenwechsel des Spannungsabfalls zeitlich erfasst wird. Die Rezirkulationszeitspanne ist dabei die Zeitspanne zwischen dem Umschaltzeitpunkt des Schaltschemas als Beginn und dem Zeitpunkt des Vorzeichenwechsels des Spannungsabfalls über dem Treiber als Ende. Diese für jeweils eine der Motorphasen ermittelten Rezirkulationszeitspannen bzw. für mehrere Motorphasen ermittelten Rezirkulationszeitspannen werden nun miteinander verglichen, und zwar entweder pro Motorphase oder motorphasenübergreifend. Die Rezirkulationszeitspannen liegen größenmäßig innerhalb vorgebbarer Erwartungswertbereiche, die für fehlerfrei arbeitende Schrittmotoren erstellt worden sind. Abweichungen der aktuellen Rezirkulationszeitspannen von diesen Erwartungswertbereichen dienen erfindungsgemäß als Hinweis für einen drohenden Schrittverlust des Schrittmotors.

Der Erfindung liegt deshalb die Aufgabe zugrunde, ein Verfahren und eine Schaltungsanordnung zu schaffen, mit dem/der in der genannten Spannungsbasierten (d.h. Spannungsgesteuerten oder Spannungsgeregelten) Betriebsart des Schrittmotors eine an dessen Motorwelle anliegende mechanische Last des Motors sensorlos erfasst werden kann.

Gelöst wird diese Aufgabe mit einem Verfahren gemäß Anspruch 1 und einer Schaltungsanordnung gemäß Anspruch 4.

Mit diesen Lösungen wird somit bei niedrigen Motordrehzahlen, bei denen die genannte Spannungsbasierte (d.h. Spannungsgesteuerte oder Spannungsgeregelte) Betriebsart bevorzugt wird, eine sensorlose Lastmessung und nach entsprechender Umrechnung im Bedarfsfall auch eine Lastwinkelbestimmung des Schrittmotors ermöglicht. Dies ist für eine Anschlagdetektion, die Ermittlung von Lastprofilen, sowie eine energieeffiziente Ansteuerung des Motors über den gesamten Drehzahlbereich, d.h. insbesondere in Kombination mit der oben genannten Lastwinkelerfassung in der Stromgesteuerten Betriebsart bei höheren Motordrehzahlen, von besonderer Bedeutung.

Ein besonderer Vorteil der erfindungsgemäßen Lösungen besteht darin, dass sie mit einem nur geringen Aufwand an Chipfläche realisiert werden können. Insbesondere ist zur Ermittlung des Stromverlaufes kein Analog-DigitalWandler mit entsprechender digitaler Signalverarbeitung und aufwändigen Vektoroperationen erforderlich. Auch werden keine zusätzlichen Strommesswiderstände benötigt, die nicht nur höhere Kosten, sondern auch eine Erhöhung der Verlustleistung verursachen würden.

Prinzipiell wird vorliegend in der genannten Spannungsbasierten Betriebsart die Phasenverschiebung zwischen dem tatsächlichen Spulenstrom und der an die Spule angelegten (bekannten) Spannung (Spannungsvorgabe) bestimmt, um daraus entweder eine an der Motorwelle anliegende mechanische Last oder auch einen generatorischen Betrieb des Motors sensorlos zu ermitteln. Wenn keine Last am Motor anliegt, beträgt der Lastwinkel (d.h. der Winkel zwischen dem Rotorfeld und dem Statorfeld des Motors) 0° und der Spulenstrom eilt der angelegten Spulenspannung mit einer Phasenverschiebung von bis zu 90° nach. Mit steigender Last vergrößert sich der Lastwinkel von 0° auf bis zu 90°, während sich die Phasenverschiebung zwischen angelegter Spulenspannung und Spulenstrom von 90° auf bis zu 0° vermindert. Bei generatorischem Betrieb vergrößert sich die Phasenverschiebung zwischen Spulenstrom und angelegter Spulenspannung von 90° auf bis zu 180°.

Die Ermittlung dieser Phasenverschiebung erfordert eine genaue Bestimmung zumindest eines bestimmten Punktes im Stromverlauf des tatsächlichen Spulenstroms, zum Beispiel dessen Spitzenwert oder Nulldurchgang, an dem dann die Phasenverschiebung zur Spulenspannung gemessen wird.

Erfindungsgemäß wird als Zeitpunkt, zu dem diese Phasenverschiebung bestimmt wird, bevorzugt der Nulldurchgang des tatsächlichen Spulenstroms gewählt, da dieser stabil und eindeutig unabhängig von dem tatsächlichen Maximum des Spulenstroms ermittelt werden kann. Außerdem ist die Steigung des im Allgemeinen sinusförmigen Spulenstroms im Nulldurchgang am höchsten, so dass dieser Zeitpunkt und damit die Phasenverschiebung hier am genauesten bestimmt werden kann.

Zwar ist es im Zusammenhang mit der stromgeregelten Betriebsart bekannt, den tatsächlichen Spulenstromverlauf und damit auch dessen Nulldurchgang anhand des durch den Spulenstrom verursachten Spannungsabfalls an einem Strommesswiderstand zu ermitteln, der im Fußpunkt einer aus einem ersten bis vierten Halbleiterschalter gebildeten Brückenschaltung angeordnet ist, wobei die Spule in einen Zweig der Brückenschaltung geschaltet ist und die Halbleiterschalter zum Schalten der durch die betreffende Motorspule fließenden Ströme dienen.

Allerdings ist insbesondere bei hoher Motorlast und der damit verbundenen geringen Verschiebung zwischen der Spulenspannung und dem Spulenstrom prinzipbedingt die Einschaltdauer der an die betreffende Spule angelegten (PWM-) Spannung in der Umgebung des Nulldurchgangs des Spulenstroms ebenfalls im Wesentlichen Null. In diesem Stromnulldurchgang befindet sich die Spule somit nahezu ausschließlich im Bereich der Rezirkulation, und es fließt im Wesentlichen kein Spulenstrom durch den genannten Strommesswiderstand. Somit tritt im Spannungsnulldurchgang auch der Spannungsabfall an diesem Strommesswiderstand nur mit niedrigem Tastverhältnis nahe bei oder bei Null auf, so dass eine sinnvolle Auswertung nur beschränkt möglich ist.

Es wird deshalb in der Spannungsbasierten Betriebsart zur Detektion des Nulldurchgangs des tatsächlichen Spulenstroms nicht der Spannungsabfall an dem genannten Strommesswiderstand, sondern der durch den Spulenstrom verursachte Spannungsabfall an den Innenwiderständen der Halbleiterschalter erfasst, und zwar erfindungsgemäß zu denjenigen Zeitpunkten bzw. in denjenigen Zeitintervallen, in denen die an die Spule angelegte (PWM-) Spannung Null ist.

Der Spannungsabfall wird dabei erfindungsgemäß in Form der Differenz der Spannungen an den beiden Low-Side- oder High-Side-Halbleiterschaltern der Brückenschaltung bestimmt. Zu den Zeitpunkten, zu denen diese Differenz Null ist, wird jeweils ein Nulldurchgang des tatsächlichen Spulenstroms festgelegt.

Die Phasenverschiebung zwischen dem insbesondere auf diese Weise ermittelten Nulldurchgang des Spulenstroms und dem (bekannten) Nulldurchgang der angelegten Spulenspannung kann dann zum Beispiel in Form des aktuellen Standes eines Mikroschrittzählers zum Zeitpunkt des Nulldurchgangs des Spulenstroms quantifiziert werden, der somit einen Indikator für die anliegende Motorlast und nach entsprechender Umrechnung bzw. Normierung den Lastwinkel des Motors darstellt. Der Mikroschrittzähler wird dabei zum Zeitpunkt des Nulldurchgangs der üblicherweise sinusförmigen (vorgegebenen) Spulenspannung gestartet (und zwar insbesondere im ersten Quadranten dieser Spannung), wobei sich die Spulenspannung aus einer Mehrzahl von in einer Sinustabelle gespeicherten und zeitsequentiell ausgelesenen Sinuswerten zusammensetzt, mit denen jeweils ein Mikroschritt erzeugt wird.

Vorzugsweise können die einzelnen Sinuswerte für eine erste Drehrichtung des Motors in einer ersten Richtung von 0° bis 90° (bzw. 360°) und für die entgegengesetzte zweite Drehrichtung des Motors in der entgegengesetzten zweiten Richtung, d.h. von 90° (bzw. 360°) bis 0° aus der Sinustabelle ausgelesen werden.

Da in jeder (sinusförmigen) vollständigen Spulenstromwelle zwei Nulldurchgänge auftreten, kann die Phasenverschiebung (Lastindikator) bei zwei Motorspulen insgesamt viermal in jeder Vollwelle, d.h. einmal in jedem Vollschritt des Motors ermittelt werden.

Die Halbleiterschalter sind bevorzugt als MOSFET-Schalter realisiert. Dabei hat der Absolutwert des Innenwiderstands, auch wenn dieser Exemplarstreuungen und einer thermischen Abhängigkeit unterworfen ist, aufgrund der genannten Differenzbildung bzw. der Abfrage auf den Nulldurchgang keine relevante Bedeutung. Durch die Subtraktion der Spannungen an jeweils zwei MOSFET-Schaltern (die aus Effizienzgründen möglichst niederohmig gewählt werden), verdoppelt sich betragsmäßig der relativ geringe Spannungsabfall an einem MOSFET-Schalter, so dass eine besonders robuste Erfassung des Nulldurchgangs des Spulenstroms sichergestellt ist.

Weitere Einzelheiten, Merkmale und Vorteile der Erfindung ergeben sich aus der folgenden Beschreibung von bevorzugten Ausführungsformen anhand der Zeichnung. Es zeigt:
Fig. 1 ein Blockschaltbild einer beispielhaften Ausführungsform einer Schaltungsanordnung zur Durchführung des erfindungsgemäßen Verfahrens;
Fig. 2 ein Blockschaltbild einer Einheit Nd aus Figur 1;
Fig. 3 Zeitdiagramme von an eine Motorspule angelegten PWM-Spannungen und der dadurch erzeugten Ströme;
Fig. 4 beispielhafte zeitliche Verläufe von Spulenspannungen und resultierenden Spulenströmen bei unterschiedlichen Motorlasten; und
Fig. 5 einen zeitlichen Verlauf einer Spulenspannung und eines Spulenstroms zur Verdeutlichung einer Lastindikatorbestimmung.

Die Erfindung geht aus von einem Verfahren und einer Schaltungsanordnung zum Ansteuern eines Schrittmotors in einer Spannungsbasierten (d.h. Spannungsgesteuerten oder Spannungsgeregelten) Betriebsart gemäß der Offenbarung in der WO 2015/192831. In der nachfolgenden Beschreibung werden deshalb im Wesentlichen nur die erfindungsgemäßen Weiterbildungen dieses bekannten Verfahrens bzw. dieser bekannten Schaltungsanordnung erläutert, während hinsichtlich der unverändert übernommenen Verfahrensschritte und Schaltungskomponenten auf diese Druckschrift Bezug genommen wird.

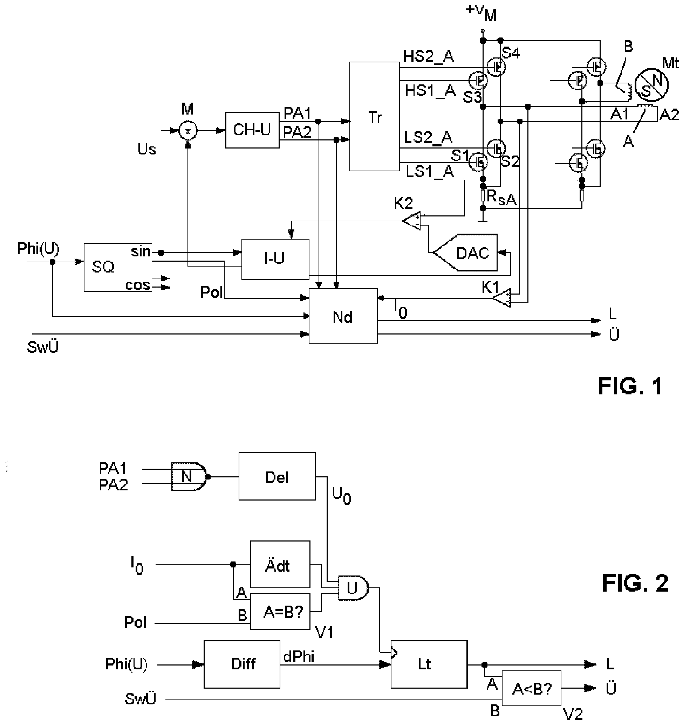

Figur 1 zeigt ein Blockschaltbild einer beispielhaften Ausführungsform einer Schaltungsanordnung zur Durchführung des erfindungsgemäßen Verfahrens für eine erste Spule A eines Schrittmotors Mt. Die gezeigten Komponenten sind in gleicher Weise auch für die zweite Spule B (und ggf. jede weitere Spule) des anzusteuernden Schrittmotors Mt vorzusehen.

Die Schaltungsanordnung umfasst eine aus einem ersten bis vierten Halbleiterschalter S1, S2, S3, S4 gebildete Brückenschaltung, die zwischen einer Versorgungsspannung V_{M} und Masse liegt und in deren Brückenzweig die erste Spule A des Schrittmotors Mt geschaltet ist.

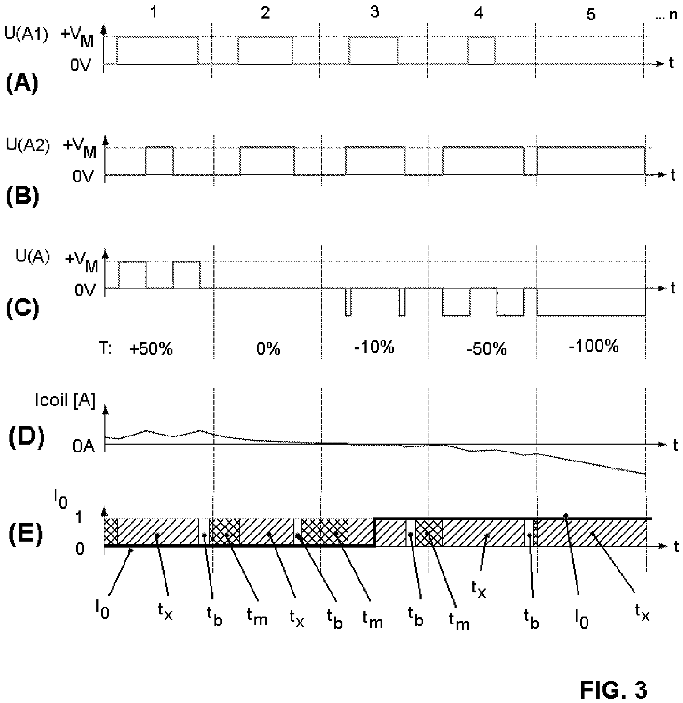

Ferner ist eine Treiberschaltung Tr vorgesehen, mit der an Low-Side-Ausgängen LS1_A, LS2_A anliegende Ansteuersignale für den ersten und zweiten Halbleiterschalter S1, S2 und an High-Side-Ausgängen HS1_A HS2_A anliegende Ansteuersignale für den dritten und vierten Halbleiterschalter S3, S4 erzeugt werden. Die Halbleiterschalter S1, S2, S3, S4 werden damit so geschaltet, dass in der Spannungsgesteuerten bzw. Spannungsgeregelten Betriebsart eine erste PWM-Spannung U(A1) gemäß Figur 3(A) in einer ersten Richtung (Polarität) und eine zweite PWM-Spannung U(A2) gemäß Figur 3(B) in der entgegengesetzten zweiten Richtung (Polarität) an die erste Spule A angelegt wird, so dass sich eine resultierende effektive PWM-Spulenspannung U(A)=U(A1)-U(A2) an der Spule gemäß Figur 3(C) mit dem dort angegebenen Tastverhältnis T ergibt, mit der ein in Figur 3(D) dargestellter Verlauf des tatsächlichen Spulenstroms Icoil (hier im Bereich des Nulldurchgangs) erzeugt wird.

Dieser Spulenstrom Icoil kann in Form des dadurch erzeugten positiven oder negativen Spannungsabfalls an einem Messwiderstand R_{sA} im Fußpunkt der Brückenschaltung gemessen und mit einem Soll-Spulenstrom verglichen werden, um das Tastverhältnis T der PWM-Spulenspannung in bekannter Weise entsprechend nachzuregeln.

Die Schaltungsanordnung umfasst weiterhin einen ersten und einen zweiten Komparator K1, K2, einen Digital-Analog-Wandler DAC, einen Chopper CH-U (Spannungschopper) für die Spannungsbasierte Betriebsart, eine Einheit I-U zur Stromnachführung des Choppers CH-U, einen Multiplizierer M, einen Sequenzer (insbesondere in Form einer Sinus-/Cosinus-Tabelle), sowie erfindungsgemäß eine Einheit Nd zur Erzeugung eines Lastindikatorsignals L und vorzugsweise auch zur Erzeugung eines Überlast-Indikatorsignals Ü.

Diese Komponenten sind in gleicher Weise auch für die zweite Spule B des Motors Mt (in diesem Beispielsfall ein 2-Phasen-Motor) und ggf. jede weitere Spule des Motors vorgesehen.

Die Schaltungsanordnung weist einen ersten Eingang für einen vorgegebenen (rotierenden) Phasenwinkel Phi(U) einer vorgegebenen Spannung (Spannungsvorgabe) für die Motorspulen sowie einen zweiten Eingang für einen Schwellwert SwÜ für eine Motor-Überlastdetektion auf.

An einem ersten Ausgang der Schaltungsanordnung liegt ein aktueller Wert des Lastindikatorsignals L des Motors Mt an, während an einem zweiten Ausgang der Schaltungsanordnung das Überlast-Indikatorsignal Ü zur Verfügung gestellt wird.

Der Treiberschaltung Tr werden zur Erzeugung der oben genannten Ansteuersignale für die Halbleiterschalter S1 bis S4 digitale Schaltsignale PA1, PA2 zugeführt, die an den beiden Ausgängen des Choppers CH-U in Abhängigkeit von dem an seinem Eingang anliegenden Eingangssignal erzeugt werden.

Der Eingang des Choppers CH-U ist mit einem Ausgang des Multiplizierers M verbunden.

Die entsprechend der Polarität der Spulenströme an dem Messwiderstand R_{sA} abfallende positive bzw. negative Spannung wird einem ersten Eingang des zweiten Komparators K2 zugeführt, an dessen zweitem Eingang der Ausgang des Digital/Analog-Wandlers DAC anliegt, mit dem vorzugsweise in der digitalen Ebene erzeugte Spannungs-Vergleichswerte in analoge Spannungs-Vergleichswerte umgewandelt werden, um auf diese Weise die momentanen tatsächlichen Spulenstromwerte mit den jeweiligen momentanen Soll-Spulenstromwerten zu vergleichen.

Alternativ dazu ist es auch möglich, auf den zweiten Komparator K2 und den Digital/Analog-Wandler DAC zu verzichten und statt dessen einen Analog/Digital-Wandler vorzusehen, mit dem die an dem Messwiderstand R_{sA} abfallende Spannung digitalisiert wird, so dass der Vergleich der Ist- und der Soll-Spulenströme vollständig in der digitalen Ebene erfolgt.

Das Ausgangssignal am Ausgang des zweiten Komparators K2 wird einem ersten Eingang der Einheit I-U zur Stromnachführung des ersten Choppers CH-U zugeführt.

Der vorgegebene und an dem ersten Eingang der Schaltungsanordnung anliegende (rotierende) Phasenwinkel Phi(U) der Spannungsvorgabe wird einem ersten Eingang der Einheit Nd sowie dem Sequenzer SQ zugeführt, mit dem an dessen ersten bzw. dritten Ausgang die beiden um 90° phasenverschobenen, dem anliegenden Phasenwinkel Phi entsprechenden digitalen Spannungsvorgabe- oder Sollwerte für die erste bzw. die zweite Spule A, B (sin/cos-Signale) erzeugt werden. Außerdem erzeugt der Sequenzer SQ an einem zweiten und vierten Ausgang jeweils ein Polaritätssignal Pol, das die momentane Polarität der jeweiligen Spannungsvorgabewerte für die erste bzw. die zweite Spule A, B anzeigt. Wie schon erwähnt, werden nachfolgend nur die Schaltungskomponenten und die Signalverarbeitung für die erste Spule A beschrieben.

Die Spannungsvorgabewerte Us für die erste Spule A am Ausgang des Sequenzers SQ werden einem zweiten Eingang der Einheit I-U sowie einem ersten Eingang des Multiplizierers M zugeführt. Das Polaritätssignal Pol dieser Spannungsvorgabewerte Us wird einem zweiten Eingang der Einheit Nd zugeführt.

Die Einheit I-U erzeugt an ihrem mit einem Eingang des Digital-Analog-Wandlers DAC verbundenen ersten Ausgang in Abhängigkeit von dem an ihrem ersten Ein gang anliegenden Ausgangssignal des zweiten Komparators K2 sowie den an ihrem zweiten Eingang anliegenden Soll- oder Spannungsvorgabewerten die oben genannten digitalen Spannungs-Vergleichswerte.

Die Einheit I-U erzeugt weiterhin an einem zweiten Ausgang, der mit einem zweiten Eingang des Multiplizierer M verbunden ist, ein Signal zur Skalierung der an dem ersten Eingang des Multiplizierers M anliegenden Spannungsvorgabewerte Us in Abhängigkeit von dem Ausgangssignal des zweiten Komparators K2 in der Weise, dass Abweichungen des tatsächlichen Spulenstroms von dem Soll-Spulenstrom entgegengewirkt wird. Der Ausgang des Multiplizierers M, an dem somit die skalierten Spannungsvorgabewerte anliegen, ist mit dem Eingang des Choppers CH-U verbunden.

Die Einheit I-U kann in der Weise realisiert werden, wie es in der WO2015/192831 beschrieben ist.

Erfindungsgemäß sind die beiden Anschlüsse der ersten Spule A mit den beiden Eingängen des ersten Komparators K1 verbunden. Somit liegt an einem ersten Eingang des ersten Komparators K1 die an dem Innenwiderstand R_{LS1} des ersten Halbleiterschalters S1 abfallende Spannung dU_{LS1} an, während einem zweiten Eingang des ersten Komparators K1 die an dem Innenwiderstand R_{LS2} des zweiten Halbleiterschalters S2 abfallende Spannung dU_{LS2} zugeführt wird.

Der erste Komparator K1 dient zur Auswertung und Bildung der Differenz der beiden an seinen Eingängen anliegenden Spannungen, so dass die Differenzspannung U_{diff} = dU_{LS1} - dU_{LS2} = Icoil * (R_{LS1} + R_{LS2}) entsteht, die der über der Spule A abfallenden Spannung entspricht, wobei R_{LS1} und R_{LS2} die Innenwiderstände des ersten bzw. zweiten Halbleiterschalters S1, S2 bezeichnen. Wenn diese Differenz Null ist, so liegt ein Nulldurchgang des tatsächlichen Spulenstroms Icoil vor, wobei der genaue Wert der Innenwiderstände der Halbleiterschalter nicht relevant ist.

Wie mit Bezug auf Figur 3 noch erläutert werden wird, kann die Bestimmung des Strom-Nulldurchgangs nur in den Zeitintervallen tm vorgenommen werden, in denen entweder die beiden Low-Side-Halbleiterschalter S1, S2 oder die beiden High-Side-Halbleiterschalter durchgeschaltet sind, d.h. sowohl die erste PWM-Spannung U(A1) gemäß Figur 3(A) als auch die zweite PWM-Spannung U(A2) gemäß Figur 3(B) Null ist.

Das Auftreten eines solchen Nulldurchgangs des Spulenstroms ist mit einem Vorzeichenwechsel der gebildeten Differenzspannung und somit der Polarität des Spulenstroms Icoil verbundenen. Dieser Vorzeichenwechsel wird am Ausgang des ersten Komparators K1 durch einen Wechsel des logischen Pegels eines der Einheit Nd zugeführten Nulldurchgangssignals I₀ von "0" auf "1" bzw. umgekehrt angezeigt. Ein Verlauf des Nulldurchgangssignals I₀ ist in Figur 3(E) gezeigt, wobei dessen "0"-Pegel im dargestellten Beispiel einer positiven Polarität (Richtung) des Spulenstroms Icoil und ein "1"- Pegel des Nulldurchgangssignals I₀ einer negativen Polarität (bzw. entgegengesetzte Richtung) des Spulenstroms Icoil durch die Spule A zugeordnet ist. Diese Zuordnung kann aber natürlich auch umgekehrt vorgenommen werden.

Figur 2 zeigt ein Blockschaltbild der Einheit Nd zur Erzeugung eines Lastindikatorsignals L und vorzugsweise auch zur Erzeugung eines Überlast-Indikatorsignals Ü.

Die Einheit Nd umfasst ein logisches NOR-Gatter N, ein logisches UND-Gatter U, ein Verzögerungsglied Del, einen Änderungsdetektor Ädt, einen ersten und einen zweiten Vergleicher V1, V2, ein Differenzbildner (d.h. Phi(U) modulo 180°-Bildner) Diff, sowie ein Latch Lt.

Den beiden Eingängen des NOR-Gatters N, die an den beiden Ausgängen des Choppers CH-U anliegen, werden die von diesem erzeugten digitalen Schaltsignale PA1, PA2 zugeführt, mittels derer die Treiberschaltung (Tr) die Ansteuersignale für den ersten bis vierten Halbleiterschalter (S1 ,..S4) der Brückenschaltung erzeugt.

Der Ausgang des NOR-Gatters N ist mit einem Eingang des Verzögerungsgliedes Del verbunden, dessen Ausgang wiederum an einem ersten Eingang des UND-Gatters U anliegt.

Einem Eingang des Änderungsdetektors Ädt sowie einem ersten Eingang A des ersten Vergleichers V1, die beide an dem Ausgang des ersten Komparators K1 anliegen, wird das von diesem erzeugte Nulldurchgangssignal I₀ zugeführt.

Ein Ausgang des Änderungsdetektors Ädt ist mit einem zweiten Eingang des UND-Gatters U verbunden.

Einem zweiten Eingang B des ersten Vergleichers V1, der an dem zweiten Ausgang des Sequenzers SQ anliegt, wird das von diesem erzeugte Polaritäts- oder Vorzeichensignal Pol der momentanen Spannungsvorgabewerte zugeführt. Der Ausgang des ersten Vergleichers V1 liegt an einem dritten Eingang des UND-Gatters U an.

Der Ausgang des UND-Gatters U ist mit dem Triggereingang des Latch Lt verbunden.

Der Differenzbildner Diff umfasst einen Eingang, der an dem ersten Eingangsanschluss der Schaltungsanordnung für das Phasenwinkelsignal Phi(U) anliegt, sowie einen Ausgang, der mit einem Signaleingang des Latch Lt verbunden ist.

Am Ausgang des Latch Lt liegt das Lastindikatorsignal L an, das dem ersten Ausgangsanschluss der Schaltungsanordnung zugeführt wird.

Der Ausgang des Latch Lt ist ferner mit einem ersten Eingang A des zweiten Vergleichers V2 verbunden, an dessen zweitem Eingang B das Schwellwertsignal für die Überlastdetektion SwÜ anliegt, das, wie oben erwähnt, dem zweiten Eingangsanschluss der Schaltungsanordnung zugeführt wird.

Am Ausgang des zweiten Vergleichers V2 liegt schließlich das Überlastsignal Ü an, das dem zweiten Ausgangsanschluss der Schaltungsanordnung zugeführt wird.

Diese Einheit Nd arbeitet wie folgt:
Wie bereits erwähnt wurde, erzeugt der Chopper CH-U digitale Schaltsignale PA1, PA2, mit denen mittels der Treiberschaltung Tr die Halbleiterschalter S1, S2, S3 und S4 so geschaltet werden, dass an die Spule A die erste und die zweite PWM-Spannung U(A1), U(A2) gemäß Figur 3(A) bzw. 3(B) angelegt wird und sich die resultierende effektive Spulenspannung U(A)=U(A1)-U(A2) an der Spule ergibt.

Die oben erläuterte erfindungsgemäße Messung der über der Spule bzw. an den Innenwiderständen der Halbleiterschalter abfallenden Spannungen (die dem ersten Komparator K1 zugeführt werden) kann nur in den Zeitintervallen tm erfolgen, in denen die an die Spule angelegten PWM-Spannungen U(A1), U(A2) gemäß Figur 3(A) bzw. 3(B) beide Null sind, d.h. die beiden Low-Side-MOSFETs S1 und S2 oder die beiden High-Side-MOSFETs S3, S4 durchgeschaltet sind.

Zur Erfassung dieser Zeitintervalle dient das NOR-Gatters N, das genau dann und nur dann ein logisches "1" Signal (Spulenspannungs-Nullsignal U₀) an seinem Ausgang erzeugt, wenn die beiden digitalen Schaltsignale PA1, PA2 jeweils ein Einschaltsignal der betreffenden Halbleiterschalter und damit einen digitalen Nullpegel der beiden PWM-Spannungen U(A1), U(A2) signalisieren.

Das Verzögerungsglied Del dient dabei zur verzögerten Weiterschaltung des von dem NOR-Gatter N erzeugten logischen Spulenspannungs-Nullsignals (U₀) an den ersten Eingang des UND-Gatters U, um damit eine durch die Halbleiterschalter und ggf. den ersten Komparator K1 bedingte Blankzeit tb im zeitlichen Verlauf des erzeugten Nulldurchgangssignals I₀ gemäß Figur 3(E) zu berücksichtigen.

Der Änderungsdetektor Ädt erzeugt an seinem Ausgang ein logisches "1" Signal, wenn sich der logische Pegel des Nulldurchgangssignals I₀ von "0" auf "1" oder umgekehrt verändert, d.h. wenn ein Nulldurchgang bzw. Polaritätswechsel des tatsächlichen Spulenstroms Icoil wie oben erwähnt mittels des ersten Komparators K1 erfasst wird.

Das Nulldurchgangssignal I₀ (dessen logischer "0" und "1" Pegel wie oben erwähnt jeweils der positiven bzw. negativen Polarität des Spulenstroms Icoil zugeordnet ist) wird mittels des ersten Vergleichers V1 mit dem Polaritäts- oder Vorzeichensignal Pol der Spannungsvorgabewerte verglichen. Der erste Vergleicher V1 erzeugt an seinem Ausgang ein logisches "1" Signal, wenn die momentanen Polaritäten dieser beiden Signale gleich sind.

Somit wird am Ausgang des UND-Gatters U ein logisches "1" Signal erzeugt, wenn die beiden an die betreffende Spule momentan angelegten PWM-Spannungen U(A1) und U(A2) Null sind (und die genannte Verzögerungszeit tb verstrichen ist), wenn außerdem durch die erläuterte Differenzbildung der an den beiden Halbleiterschaltern S1, S2 abfallenden Spannungen ein Nulldurchgang des tatsächlichen Spulenstroms Icoil detektiert wird, und wenn die momentane Polarität der Spannungsvorgabewerte mit der momentanen Polarität des Spulenstroms Icoil (nach dem genannten Nulldurchgang) übereinstimmt.

Der Differenzbildner Diff dient zur Ermittlung einer momentanen Phasenwinkeldifferenz dPhi zwischen dem anliegenden momentanen Phasenwinkelsignal Phi(U) der Spannungsvorgabe (der zwischen 0° und 360° liegt) und dem jeweils nächstliegenden, zeitlich vorhergehenden Nulldurchgang dieser Spannungsvorgabe. Die am Ausgang erzeugte Phasenwinkel-Differenz dPhi liegt somit zwischen 0° und +180°.

Der Differenzbildner Diff realisiert somit eine mathematische modulo-Funktion, nämlich Phi(U) modulo 180°.

Diese am Schalteingang des Latch Lt momentan anliegende Phasenwinkel-Differenz dPhi wird als Lastindikatorsignal L an dessen Ausgang durchgeschaltet, wenn das dem Triggereingang des Latch Lt zugeführte Ausgangssignal des UND-Gatters U den logischen "1" Pegel aufweist. Das Lastindikatorsignal L ist somit umso kleiner, je größer die Motorlast ist und umgekehrt. Es kann im Bedarfsfall normiert und in einen Lastwinkel umgerechnet werden.

Der zweite Vergleicher V2 erzeugt schließlich an seinem Ausgang ein Überlastsignal Ü, wenn das an dem ersten Eingang A anliegende Lastindikatorsignal L kleiner ist als der an dem zweiten Eingang B anliegende Überlast-Schwellwert SwÜ.

Figur 3 zeigt für die oben genannte Spannungsbasierte (d.h. Spannungsgesteuerte oder Spannungsgeregelte) Betriebsart des Schrittmotors für fünf Stromflusszyklen (auch Chopperzyklen genannt) 1, 2, 3, ...5 die erwähnte erste und zweite PWM-Spannung U(A1), U(A2), die durch entsprechendes Schalten der Halbleiterschalter der Brückenschaltung gemäß Figur 1 an die Spule A angelegt werden, und zwar mit jeweils entgegengesetzten Polungen, so dass durch Veränderung der Pulsweiten dieser beiden Spannungen relativ zueinander eine effektive PWM-Spannung in Form einer Differenzspannung U(A)=U(A1)-U(A2) gemäß Figur 3(C) mit positiver oder negativer Polarität an der Motorspule anliegt, deren effektives Tastverhältnis T somit zwischen -100% (negative Polarität) und +100% (positive Polarität) einstellbar ist. Der daraus resultierende, tatsächliche Spulenstromverlauf Icoil (hier im Bereich des Nulldurchgangs) ist in Figur 3(D) beispielhaft angedeutet.

Der gesamte Stromverlauf Icoil wird durch eine Vielzahl n von solchen Stromflusszyklen 1, 2, ...n erzeugt. Im Detail wird dazu auf die bereits erwähnte WO 2015/192831 Bezug genommen.

Wie bereits erwähnt wurde, zeigt Figur 3(E) den zugehörigen Verlauf des Nulldurchgangssignals I₀ am Ausgang des ersten Komparators K1 in Figur 1, dessen logischer Pegel beim Auftreten eines wie oben beschrieben ermittelten Nulldurchgangs des tatsächlichen Spulenstroms Icoil wechselt.

Ferner sind dort auch diejenigen Zeitintervalle tm markiert, in denen die beiden Low-Side-Halbleiterschalter (MOSFETs) S1, S2 durchgeschaltet sind. Die Länge dieser Zeitintervalle tm entspricht jeweils der Zeitdauer, während der beide PWM-Spulenspannungen U(A1) und U(A2) Null sind, abzüglich der ebenfalls markierten Blankzeit tb. Schließlich sind auch die Zeitintervalle tx angedeutet, in denen entweder U(A1) oder U(A2) nicht Null sind und somit keine Messung des Spannungsabfalls an den Halbleiterschaltern S1, S2 bzw. über der Spule A möglich ist.

Somit fließt also bei einem Tastverhältnis von 0% zwar kein Strom durch den Messwiderstand R_{sA} (siehe Figur 1), an den beiden Innenwiderständen der Low-Side-Halbleiterschalter (MOSFETs) S1 und S2 ist jedoch ein Spannungsabfall dULS1 = Icoil * RLS1 bzw. dULS2 = Icoil * RLS2 messbar, wobei aus deren Differenz wie oben erläutert das Nulldurchgangssignal I₀ mittels des ersten Komparators K1 erzeugt wird.

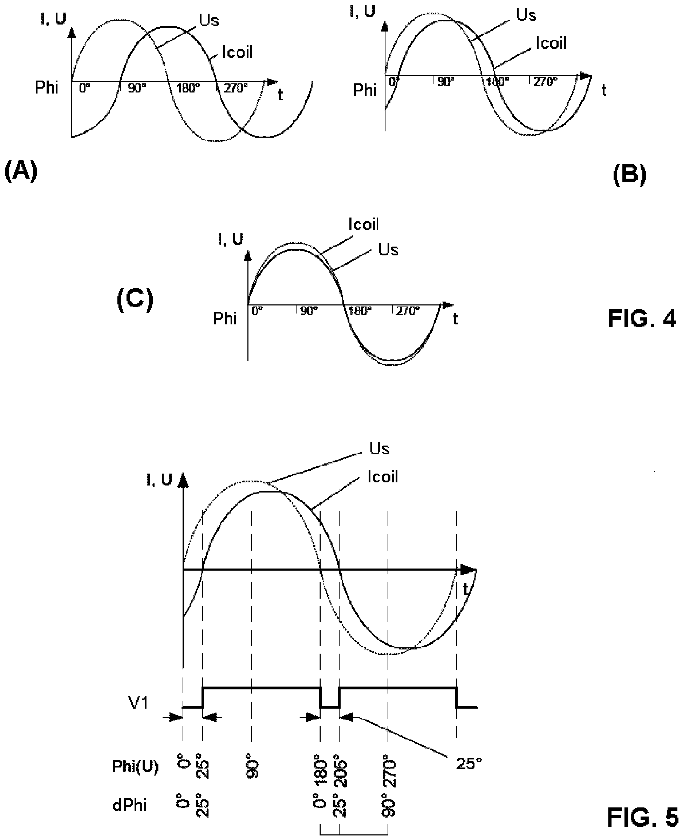

Figur 4 zeigt für drei verschiedene Motorlasten die jeweilige Phasenverschiebung zwischen der vorgegebenen, mittels des Sequenzers SQ aus den anliegenden Phasenwinkeln Ph(U) erzeugten und in analoger Form dargestellten Spulenspannung Us (Soll-Spannung, Spannungsvorgabe) und dem tatsächlichen Spulenstrom Icoil.

Gemäß Figur 4(A) folgt der Spulenstrom Icoil der Spulenspannung Us bei nur sehr geringer Last am Motor mit einem Phasenversatz von etwa 90°. Figur 4(B) zeigt den Fall einer mittleren Motorlast mit deutlich geringerem Phasenversatz, während in Figur 4(C) eine Phasenverschiebung von nahezu 0° (entsprechend einem Lastwinkel von etwa 90°) dargestellt ist, der durch eine hohe bzw. maximale Motorlast erzeugt wird.

Figur 5 zeigt die Zusammenhänge zwischen dem zeitlichen Verlauf der vorgegebenen Spulenspannung Us und des dadurch erzeugten Spulenstroms Icoil, der hier einen Phasenversatz von 25° zu der Spannung Us aufweist. Ferner ist das Ausgangssignal des ersten Vergleichers V1 dargestellt, das nur dann einen logischen "1" Pegel aufweist, wenn (siehe oben) die Polarität der vorgegebenen Spulenspannung Us mit der Polarität des Spulenstroms Icoil übereinstimmt. Umgekehrt nimmt das Ausgangssignal des ersten Vergleichers V1 den logischen "0" Pegel ein, sobald die Spannung Us einen Nulldurchgang aufweist, und zwar solange, bis auch der (nacheilende) Strom Icoil ebenfalls den Nulldurchgang passiert.

Weiterhin ist der zeitliche Verlauf des der Schaltungsanordnung zugeführten Spannungsvorgabesignals in Form des umlaufenden Phasenwinkels Phi(U) dieser Spannung dargestellt. Schließlich ist dazu auch der zeitliche Verlauf des Differenz- bzw. modulo-Signals dPhi = Phi(U) modulo 180° am Ausgang des Differenzbildners Diff gezeigt, das sich für die beispielhaft gezeigte Phasenverschiebung des (nacheilenden) Spulenstroms Icoil gegenüber der angelegten Spulenspannung Us von 25° ergibt.

## Patentansprüche

1. Verfahren zur sensorlosen Erfassung einer bei einem Schrittmotor an dessen Motorwelle anliegenden mechanischen Motorlast, wobei der Schrittmotor in einer Spannungsbasierten Betriebsart betrieben wird, in der ein Soll-Spulenstrom durch Anlegen einer vorgegebenen Spulenspannung (Us) an die Spule erzeugt wird, wobei die Spule in einen Brückenzweig einer aus einem ersten bis vierten Halbleiterschalter (S1 ,...S4) gebildeten Brückenschaltung geschaltet ist, und wobei die vorgegebene Spulenspannung (Us) durch Schalten der Halbleiterschalter in Form mindestens einer PWM-Spannung (U(A1), U(A2)) mit veränderbarem Tastverhältnis (T) an die Spule angelegt wird,
wobei die Motorlast in Form eines Lastindikatorsignals (L) erfasst wird, das eine Phasenverschiebung zwischen einem Nulldurchgang der vorgegebenen Spulenspannung (Us) und dem nächstfolgenden Nulldurchgang des dadurch erzeugten Spulenstroms (Icoil) darstellt,
**dadurch gekennzeichnet, dass** die Festlegung eines Nulldurchgangs des Spulenstroms (Icoil) die folgenden Schritte umfasst:
- es wird mittels eines ersten Komparators (K1), dessen Eingänge mit beiden Anschlüssen einer Spule verbunden sind, ein logisches Nulldurchgangssignal (I0) erzeugt, das eine Polarität einer aufgrund des Spulenstroms über den Innenwiderständen zweier Halbleiterschalter abfallenden Spannung anzeigt,
- es wird ein besagtes logisches Spulenspannungs-Nullsignals (U0) erzeugt, wenn in denjenigen Zeitintervallen (tm), in denen die an die Spule angelegte PWM-Spannung (U(A1), U(A2)) Null ist, ein Polaritätswechsel einer aufgrund des Spulenstroms über den Innenwiderständen der Halbleiterschalter abfallenden Spannung gegenüber der vorangehenden Messung auftritt,
- es wird anhand eines momentanen Phasenwinkels (Phi(U)) der vorgegebenen Spulenspannung (Us) eine momentane Phasenwinkeldifferenz dPhi = Phi(U) modulo 180° erzeugt, und
- es wird ein Lastindikatorsignal (L) ausgegeben, wenn als eine erste Bedingung das logische Nulldurchgangssignal (10) einen Polaritätswechsel der über den Innenwiderständen der Halbleiterschalter abfallenden Spannung anzeigt und wenn als eine zweite Bedingung das Spulenspannungs-Nullsignal (U0) anzeigt, dass die an die Spule angelegte PWM-Spannung (U(A1), U(A2)) Null ist.

2. Verfahren nach Anspruch 1,
bei dem die über den Innenwiderständen der Halbleiterschalter abfallende Spannung in Form der Differenz der Spannungen an den beiden Low-Side- oder High-Side-Halbleiterschaltern der Brückenschaltung bestimmt und ein Nulldurchgang des dadurch erzeugten Spulenstroms (Icoil) festgelegt wird, wenn diese Differenz Null ist.

3. Verfahren nach Anspruch 1,
bei dem die Phasenverschiebung zwischen dem Nulldurchgang der vorgegebenen Spulenspannung (Us) und dem Nulldurchgang des dadurch erzeugten Spulenstroms (Icoil) in Form des aktuellen Standes eines Mikroschrittzählers zum Zeitpunkt des Nulldurchgangs des Spulenstroms (Icoil) quantifiziert wird.

4. Schaltungsanordnung zur sensorlosen Erfassung einer bei einem Schrittmotor an dessen Motorwelle anliegenden mechanischen Motorlast, wobei der Schrittmotor in einer Spannungsbasierten Betriebsart betrieben wird, bei der ein Soll-Spulenstrom durch Anlegen einer vorgegebenen Spulenspannung (Us) an die Spule (A) erzeugt wird, mit einer aus einem ersten bis vierten Halbleiterschalter (S1,...S4) gebildeten Brückenschaltung, in deren Brückenzweig die Spule geschaltet ist, um die vorgegebene Spulenspannung (Us) durch Schalten der Halbleiterschalter in Form mindestens einer PWM-Spannung (U(A1), U(A2)) mit veränderbarem Tastverhältnis (T) an die Spule anzulegen, **gekennzeichnet durch**:
- einen ersten Komparator (Kl), dessen Eingänge mit den Anschlüssen der Spule verbunden sind, eingerichtet zur Erzeugung eines logischen Nulldurchgangssignals (I₀), das eine Polarität einer aufgrund des Spulenstroms über den Innenwiderständen der Halbleiterschalter abfallenden Spannung anzeigt,
- eine Einheit (N, Del) eingerichtet zur Erfassung derjenigen Zeitintervalle (tm), in denen die an die Spule angelegte PWM-Spannung (U(A1), U(A2)) Null ist, und zur Erzeugung eines logischen Spulenspannungs-Nullsignals (U₀),
- einen Differenzbildner (Diff), dem ein momentaner Phasenwinkel (Phi(U)) der vorgegebenen Spulenspannung (Us) zugeführt wird, eingerichtet zur Erzeugung einer momentanen Phasenwinkeldifferenz dPhi = Phi(U) modulo 180°, sowie
- ein Latch (Lt) mit einem Signaleingang, einem Schalteingang sowie einem Signalausgang, wobei die momentane Phasenwinkeldifferenz (dPhi) an dem Signaleingang anliegt und als Lastindikatorsignal (L) an den Signalausgang durchgeschaltet wird, wenn als eine erste Bedingung das Nulldurchgangssignal (I₀) einen Polaritätswechsel der über den Innenwiderständen der Halbleiterschalter abfallenden Spannung anzeigt, und als eine zweite Bedingung das Spulenspannungs-Nullsignal (U₀) anzeigt, dass die an die Spule angelegte PWM-Spannung (U(A1), U(A2)) Null ist.

5. Schaltungsanordnung nach Anspruch 4,
mit einem ersten Vergleicher (V1), dem das Nulldurchgangssignal (I₀) sowie ein eine momentane Polarität der vorgegebene Spulenspannung (Us) anzeigendes Polaritätssignal (Pol) zugeführt wird, wobei die momentane Phasenwinkeldifferenz (dPhi) als Lastindikatorsignal (L) an den Signalausgang des Latch (Lt) durchgeschaltet wird, wenn als eine dritte Bedingung die momentane Polarität der vorgegebenen Spulenspannung (Us) mit der momentanen Polarität des Spulenstroms (Icoil) überein stimmt.

6. Schaltungsanordnung nach Anspruch 4,
mit einem Änderungsdetektor (Ädt), dem das Nulldurchgangssignal (I₀) zugeführt wird, und der an seinem Ausgang ein logisches Nulldurchgangs-Änderungssignal erzeugt, wenn sich der logische Pegel des Nulldurchgangssignals (I₀) von "0" auf "1" oder umgekehrt verändert.

7. Schaltungsanordnung nach Anspruch 6,
mit einem logischen UND-Gatter (U), dessen Eingängen das Spulenspannungs-Nullsignal (U₀), das Nulldurchgangs-Änderungssignal und das Ausgangssignal des ersten Vergleichers (V1) zugeführt wird, und dessen Ausgang mit dem Schalteingang des Latch (Lt) verbunden ist.

8. Schaltungsanordnung nach Anspruch 4,
mit einem zweiten Vergleicher (V2), dem das am Ausgang des Latch (Lt) anliegende Lastindikatorsignal (L) und ein Überlast-Schwellwert (SwÜ) zugeführt wird, zur Erzeugung eines Überlastsignals (Ü), wenn das Lastindikatorsignal (L) kleiner ist als der Überlast-Schwellwert (SwÜ).

9. Schaltungsanordnung nach Anspruch 4,
mit einer Treiberschaltung (Tr), der Ansteuersignale (PA1, PA2) zugeführt werden, zur Erzeugung von Schaltsignalen, mit denen die Halbleiterschalter (S1,..S4) so geschaltet werden, dass die vorgegebene Spulenspannung (Us) in Form einer ersten PWM-Spannung (U(A1)) mit einer ersten Polarität und einer zweiten PWM-Spannung (U(A2)) mit einer entgegengesetzten zweiten Polarität an die Spule angelegt wird.

10. Schaltungsanordnung nach Anspruch 9,
bei der die Einheit (N, Del) ein logisches NOR-Gatter (N) aufweist, dessen Eingängen die Ansteuersignale (PA1, PA2) zugeführt werden und an dessen Ausgang das Spulenspannungs-Nullsignal (U₀) anliegt.

11. Schaltungsanordnung nach Anspruch 10,
bei der die Einheit (N, Del) eine Verzögerungseinheit (Del) zur Verzögerung des Spulenspannungs-Nullsignals (U₀) um in den Halbleiterschaltern (S1,..S4) und/oder dem ersten Komparator (K1) auftretende Blankzeiten (tb) aufweist.

## Claims

1. A method for sensorless detection of a mechanical motor load applied to the motor shaft of a stepper motor, the stepper motor being operated in a voltage-based operating mode in which a nominal coil current is generated by applying a predetermined coil voltage (Us) to the coil, the coil being connected in a bridge branch of a bridge circuit formed from a first to fourth semiconductor switch (S1,...S4), and the predetermined coil voltage (Us) being applied to the coil with a variable duty cycle (T) by switching the semiconductor switch in the form of at least one PWM voltage (U(A1), U(A2)),
wherein the motor load is detected in the form of a load indicator signal (L) which represents a phase shift between a zero crossing of the predetermined coil voltage (Us) and the next zero crossing of the coil current (Icoil) generated thereby,
**characterized in that** a zero crossing of the coil current (Icoil) is defined comprising the following steps:
- by means of a first comparator (K1), the inputs of which are connected to both terminals of the coil, a logic zero-crossing signal (I₀) is generated, which indicates a polarity of a voltage dropping across the internal resistances of two semiconductor switches due to the coil current,
- a said logic coil voltage zero signal (U₀) is generated, when in those time intervals (tm) in which the PWM voltage (U(A1), U(A2)) applied to the coil is zero, a polarity change occurs in a voltage dropping across the internal resistances of the semiconductor switches due to the coil current compared to the preceding measurement,
- an instantaneous phase angle difference dPhi = Phi(U) modulo 180° is generated on the basis of an instantaneous phase angle (Phi(U)) of the given coil voltage (Us), and
- a load indicator signal (L) is output when, as a first condition, the logic zero-crossing signal (I₀) indicates a polarity change of the voltage dropping across the internal resistors of the semiconductor switches and when, as a second condition, the coil voltage zero-crossing signal (U₀) indicates that the PWM voltage (U(A₁), U(A₂)) applied to the coil is zero.

2. The method according to claim 1, in which the voltage drop across the internal resistances of the semiconductor switches is determined in the form of the difference between the voltages at the two low-side or high-side semiconductor switches of the bridge circuit and a zero crossing of the coil current (Icoil) generated thereby is defined, when said difference is zero.

3. The method according to claim 1, in which the phase shift between the zero crossing of the predetermined coil voltage (Us) and the zero crossing of the coil current (Icoil) generated thereby is quantified in the form of the current state of a microstep counter at the point in time of the zero crossing of the coil current (Icoil).

4. A circuit assembly for sensorless detection of a mechanical motor load applied to the motor shaft of a stepper motor, the stepper motor being operated in a voltage-based operating mode in which a nominal coil current is generated by applying a predetermined coil voltage (Us) to the coil (A), having a bridge circuit formed from a first to fourth semiconductor switch (S1, ... S4), in the bridge branch of which bridge circuit the coil is connected in order to apply the predetermined coil voltage (Us) to the coil by switching the semiconductor switches in the form of at least one PWM voltage (U(A1), U(A2)) with a variable duty cycle (T), **characterized by**:
- a first comparator (K1), the inputs of which are connected to the terminals of the coil, configured for generating a logic zero-crossing signal (I₀), which indicates a polarity of a voltage dropping across the internal resistances of the semiconductor switches due to the coil current,
- a unit (N, Del) configured for detecting those time intervals (tm) in which the PWM voltage (U(A1), U(A2)) applied to the coil is zero, and for generating a logical coil voltage zero signal (U₀),
- a difference generator (Diff), to which an instantaneous phase angle (PHi(U)) of the predetermined coil voltage (Us) is supplied, configured to generate an instantaneous phase angle difference dPhi = Phi(U) modulo 180°, and
- a latch (Lt) having a signal input, a switching input and a signal output, the instantaneous phase angle difference (dPHi) being applied to the signal input and being switched through to the signal output as a load indicator signal (L) when, as a first condition, the zero-crossing signal (I₀) indicates a polarity change in the voltage dropping across the internal resistances of the semiconductor switches, and, as a second condition, the coil voltage zero signal (U₀) indicates that the PWM voltage (U(A1), U(A2)) applied to the coil is zero.

5. The circuit assembly according to claim 4, having a first comparator (V1) to which the zero-crossing signal (I₀) and a polarity signal (Pol) indicating an instantaneous polarity of the predetermined coil voltage (Us) are supplied, wherein the instantaneous phase angle difference (dPHi) is switched through to the signal output of the latch (Lt) as a load indicator signal (L) when, as a third condition, the instantaneous polarity of the predetermined coil voltage (Us) matches the instantaneous polarity of the coil current (Icoil).

6. The circuit assembly according to claim 4, having a change detector (Ädt) to which the zero-crossing signal (I₀) is supplied and which generates a logic zero crossing change signal at the output thereof when the logic level of the zero-crossing signal (I₀) changes from "0" to "1" or vice versa.

7. The circuit assembly according to claim 6, having a logical AND gate (U), the inputs thereof being supplied the coil voltage zero signal (U₀), the zero-crossing change signal and the output signal of the first comparator (V1), and the output thereof being connected to the switching input of the latch (Lt).

8. The circuit assembly according to claim 4, having a second comparator (V2), to which the load indicator signal (L) and an overload threshold value (SwÜ) applying to the output of the latch (Lt) are supplied, for generating an overload signal (Ü) when the load indicator signal (L) is smaller than the overload threshold value (SwÜ).

9. The circuit assembly according to claim 4, having a driver circuit (Tr) to which control signals (PA1, PA2) are supplied for generating switching signals with which the semiconductor switches (S1,..S4) are switched so that the specified coil voltage (Us) is applied to the coil in the form of a first PWM voltage (U(A1)) with a first polarity and a second PWM voltage (U(A2)) with an opposite second polarity.

10. The circuit assembly according to claim 9, in which the unit (N, Del) comprises a logic NOR gate (N), the inputs thereof being supplied the control signals (PA1, PA2) and the coil voltage zero signal (U₀) being applied to the output thereof.

11. The circuit assembly according to claim 10, in which the unit (N, Del) comprises a delay unit (Del) for delaying the coil voltage zero signal (U₀) by blank times (tb) occurring in the semiconductor switches (S1,..S4) and/or the first comparator (K1).

## Revendications

1. Procédé pour la détection sans capteur d'une charge mécanique de moteur s'appliquant à l'arbre de moteur dans un moteur pas à pas, le moteur pas à pas étant exploité dans un mode de fonctionnement basé sur la tension, dans lequel un courant de bobine nominal est généré par application d'une tension de bobine prédéterminée (Us) à la bobine, la bobine étant couplée dans une branche de pont d'un circuit en pont constitué d'un premier à un quatrième commutateur à semi-conducteurs (S1 ... S4), et dans lequel la tension de bobine prédéterminée (Us) est appliquée à la bobine par commutation des commutateurs à semi-conducteurs sous la forme d'au moins une tension modulée en largeur d'impulsion (PWM) (U(A1), U(A2)) avec un rapport d'utilisation (T) variable,
dans lequel la charge du moteur est détectée sous la forme d'un signal indicateur de charge (L), qui représente un déphasage entre un passage par zéro de la tension de bobine prédéterminée (Us) et le passage par zéro suivant du courant de bobine (Icoil) ainsi généré,
**caractérisé en ce que** la fixation d'un passage par zéro du courant de bobine (Icoil) comprend les étapes suivantes :
- générer, au moyen d'un premier comparateur (K1) dont les entrées sont reliées aux deux bornes d'une bobine, un signal logique de passage par zéro (I0) qui indique une polarité d'une tension chutant en raison du courant de la bobine aux résistances internes de deux commutateurs à semi-conducteurs,
- générer un dit signal de zéro logique de tension de bobine (U0) lorsque, dans les intervalles de temps (tm) pendant lesquels la tension modulée en largeur d'impulsion (PWM) (U(A1), U(A2)) appliquée à la bobine est nulle, il se produit un changement de polarité d'une tension chutant en raison du courant de la bobine aux résistances internes des commutateurs à semi-conducteurs par rapport à la mesure précédente,
- générer, à l'aide d'un angle de phase momentané (Phi(U)) de la tension de bobine prédéterminée (Us), une différence d'angle de phase momentanée dPhi = Phi(U) modulo 180°, et
- émettre un signal indicateur de charge (L) si, comme première condition, le signal logique de passage par zéro (10) indique un changement de polarité de la tension chutant aux résistances internes des commutateurs à semi-conducteurs et si, comme deuxième condition, le signal de zéro de tension de bobine (U0) indique que la tension modulée en largeur d'impulsion (PWM) (U(A1), U(A2)) appliquée à la bobine est nulle.

2. Procédé selon la revendication 1,
dans lequel la tension chutant aux résistances internes des commutateurs à semi-conducteurs est déterminée sous la forme de la différence des tensions aux bornes des deux commutateurs à semi-conducteurs côté bas ou côté haut du circuit en pont et un passage par zéro du courant de bobine (Icoil) ainsi généré est fixé lorsque cette différence est nulle.

3. Procédé selon la revendication 1,
dans lequel le déphasage entre le passage par zéro de la tension de bobine prédéterminée (Us) et le passage par zéro du courant de bobine (Icoil) ainsi généré est quantifié sous la forme de l'état actuel d'un compteur de micro-pas au moment du passage par zéro du courant de bobine (Icoil).

4. Agencement de circuit pour la détection sans capteur d'une charge mécanique de moteur s'appliquant à l'arbre de moteur dans un moteur pas à pas, le moteur pas à pas étant exploité dans un mode de fonctionnement basé sur la tension, dans lequel un courant de bobine nominal est généré par application d'une tension de bobine prédéterminée (Us) à la bobine (A), avec un circuit en pont constitué d'un premier à un quatrième commutateur à semi-conducteurs (S1 ... S4), dans la branche de pont duquel la bobine est couplée pour appliquer la tension de bobine prédéterminée (Us) à la bobine par commutation des commutateurs à semi-conducteurs sous la forme d'au moins une tension modulée en largeur d'impulsion (PWM) (U(A1), U(A2)) avec un rapport d'utilisation (T) variable, **caractérisé par** :
- un premier comparateur (Kl) dont les entrées sont reliées aux bornes de la bobine, configuré pour générer un signal logique de passage par zéro (I₀) qui indique une polarité d'une tension chutant en raison du courant de la bobine aux résistances internes des commutateurs à semi-conducteurs,
- une unité (N, Del), configurée pour détecter les intervalles de temps (tm) pendant lesquels la tension modulée en largeur d'impulsion (PWM) (U(A1), U(A2)) appliquée à la bobine est nulle, et pour générer un signal de zéro logique de tension de bobine (U₀),
- un formateur de différence (Diff), auquel est transmis un angle de phase momentané (Phi(U)) de la tension de bobine prédéterminée (Us), configuré pour générer une différence d'angle de phase momentanée dPhi = Phi(U) modulo 180°, ainsi que
- un verrou (Lt) avec une entrée de signal, une entrée de commutation ainsi qu'une sortie de signal, la différence d'angle de phase momentanée (dPhi) étant appliquée à l'entrée de signal et étant transférée directement comme signal indicateur de charge (L) à la sortie de signal si, comme première condition, le signal de passage par zéro (I₀) indique un changement de polarité de la tension chutant aux résistances internes des commutateurs à semi-conducteurs et, comme deuxième condition, le signal de zéro de tension de bobine (U₀) indique que la tension modulée en largeur d'impulsion (PWM) (U(A1), U(A2)) appliquée à la bobine est nulle.

5. Agencement de circuit selon la revendication 4,
avec un premier comparateur (V1), auquel sont délivrés le signal de passage par zéro (I₀) ainsi qu'un signal de polarité (Pol) indiquant une polarité momentanée de la tension de bobine prédéterminée (Us), la différence d'angle de phase momentanée (dPhi) étant transférée directement en tant que signal indicateur de charge (L) à la sortie de signal du verrou (Lt) si, en tant que troisième condition, la polarité momentanée de la tension de bobine prédéterminée (Us) correspond à la polarité momentanée du courant de bobine (Icoil).

6. Agencement de circuit selon la revendication 4,
avec un détecteur de changement (Ädt) auquel est délivré le signal de passage par zéro (I₀) et qui génère à sa sortie un signal logique de changement de passage par zéro lorsque le niveau logique du signal de passage par zéro (I₀) change de « 0 » à « 1 » ou inversement.

7. Agencement de circuit selon la revendication 6,
avec une porte logique ET (U), aux entrées duquel sont délivrés le signal de zéro de tension de bobine (U₀), le signal de changement de passage par zéro et le signal de sortie du premier comparateur (V1), et dont la sortie est reliée à l'entrée de commutation du verrou (Lt).

8. Agencement de circuit selon la revendication 4,
avec un deuxième comparateur (V2), auquel sont délivrés le signal indicateur de charge (L) appliqué à la sortie du verrou (Lt) et une valeur seuil de surcharge (SwÜ), afin de générer un signal de surcharge (Ü) lorsque le signal indicateur de charge (L) est inférieur à la valeur seuil de surcharge (SwÜ).

9. Agencement de circuit selon la revendication 4,
avec un circuit d'attaque (Tr), auquel sont délivrés des signaux d'amorçage (PA1, PA2), afin de générer des signaux de commutation avec lesquels les commutateurs à semi-conducteurs (S1 ... S4) sont commutés de sorte que la tension de bobine prédéterminée (Us) est appliquée à la bobine sous la forme d'une première tension modulée en largeur d'impulsion (PWM) (U(A1)) avec une première polarité et d'une deuxième tension modulée en largeur d'impulsion (PWM) (U(A2)) avec une deuxième polarité opposée.

10. Agencement de circuit selon la revendication 9,
dans lequel l'unité (N, Del) comporte une porte logique NOR (N) aux entrées de laquelle sont délivrés les signaux d'amorçage (PA1, PA2) et à la sortie de laquelle est appliqué le signal de zéro de tension de bobine (U₀).

11. Agencement de circuit selon la revendication 10,
dans lequel l'unité (N, Del) comporte une unité de retard (Del) pour retarder le signal de zéro de tension de bobine (U₀) des temps morts (tb) survenant dans les commutateurs à semi-conducteurs (S1 ... S4) et/ou le premier comparateur (K1).
